# EUROPEAN PATENT APPLICATION

(11) **EP 3 246 739 A1**
(43) Date of publication of application: **22.11.2017**
(21) Application number: 17171666.5
(22) Date of filing: 18.05.2017
(51) Int. Cl.: G02B 6/42, G02B 6/44

(54) **EPOXY-LESS OPTICAL CONNECTOR TERMINATION APPARATUS FOR HIGH TEMPERATURE AND HIGH PRESSURE USE**

(30) Priority: 18.05.2016 US 201615158311
(71) Applicant: Teledyne Instruments, Inc., Thousand Oaks, CA 91360 (US)
(72) Inventor: JONES, Richard, Sandford, Florida 32771 (US); PANCHAL, Ketu, 302A, Ormond Beach Florida 32174 (US)
(74) Representative: Carter, Stephen John

(57) **Abstract**

The present invention provides an epoxy-less optical fiber termination. More specifically, the present invention provides an epoxy-less optical fiber termination comprising a waveguide termination having an optical fiber spliced to a stub protruding from the waveguide termination and having a strain relief disposed about the stub and the optical fiber. Additionally, the strain relief may be filled with an epoxy fill to provide additional support to the optical fiber. The present invention may be used to terminate an optical fiber joining devices in an optical communications network.

## Description

### FIELD OF THE INVENTION

The present invention relates generally to sealed bulkhead feedthrough units or assemblies for feeding optical fibers from underwater cables through a bulkhead into an equipment housing for connection to components in the housing, or for example, through the bulkhead of a subsea device.

### BACKGROUND

In subsea production, electrically operated apparatuses below sea level are typically supplied and controlled/monitored by power and communications/control lines tethered to surface operated host facilities. The power and control feeds are provided from the external sources to the subsea devices via cable conductors to submerged process control equipment, pumps and compressors, transformers, motors, and other electrically operated equipment. As these components are disposed subsea and are typically enclosed and protected by water-proof pressure vessels, power and control signals are provided by means of a cable termination and connector, which may be an optical, electrical or hybrid electric/optical penetrator, designed to penetrate and connect to equipment through a bulkhead.

Such penetrator devices may be used to power and control/monitor subsea devices, e.g., electric submersible pump (ESP) equipment which pump hydrocarbons in oil well installations, and also in other applications such as high pressure downhole electrical penetrations and other penetrations to provide power and control signals to various types of subsea equipment. The penetrator extends through the wall or bulkhead of the vessel in which the equipment is located, and is normally connected to cables at one end for connecting the equipment to an external power source. For example, in an ESP application, the connection or penetrator cannot be isolated from the pumping pressure for practical reasons. This creates an extreme environment for the connector or penetrator in terms of pressure, temperature, and high voltage. The penetrator must provide a secure connection as well as maintaining a pressure barrier for both internal pressure created by subsea equipment and external pressure caused by the depth in seawater. The temperatures are increased due to fluid temperatures as well as resistive heating of the control signal elements. These penetrators must also be able to resist sustained intense heat from a hydrocarbon fire and maintain electrical and or optical connectivity and seal integrity in high temperature and material stress situations.

Typically, a bulkhead feedthrough assembly has a first end for coupling to an underwater cable and a second end for coupling to a port in a bulkhead, and has a through bore for feeding optical fibers and electrical leads through the assembly into the housing. However, the fibers and/or leads must be sealed in the through bore in order to prevent seawater from entering the housing should there be a cable leak or other failure outside the housing. In the past, feedthrough bores have generally been sealed by filling the space around the fibers or leads with epoxy cement, which approach results in several disadvantages and unwanted results. For example, once epoxy-filled bores are filled with epoxy, the connection is permanent and the cable can no longer be disconnected, moved, or adjusted. Secondly, the epoxy can create pressure points on optical fibers, which in turn can distort the fibers and possibly block passage of light signals through the fibers and create destructive stresses.

Existing systems, apparatuses, and methods for penetrator assemblies are known and are described in at least U.S. Pat. No penetrator or bulkhead feedthrough connector, such as the penetrator or feedthrough described in U.S. Pat. No. 6,067,395 of Cairns et al., each of which are incorporated by reference herein in their entirety.

Termination of an optical fiber into a ceramic ferrule is commonplace for optical connector solutions. When considering a HTHP (High Temperature, high pressure) exposure of an epoxied termination, this design leaves much to be desired. In practice, the epoxy bond to the fiber will shear and cause the fiber to move (piston) inside of the ferrule and optical performance of the system will be reduced or create a situation in which there is no longer optical continuity.

What is needed is an improved fiber optic connection arrangement and construction that can provide a hermetic seal under extremely high pressures and high temperatures in a subsea environment while avoiding the disadvantages of the epoxy-filled approach. What is needed is a fiber optic connection assembly that prevents optical fibers from degrading over time thereby greatly increasing the useful life of the equipment and preventing unwanted downtime and part replacement.

### SUMMARY OF THE INVENTION

In order to address this issue in the development of an Optical Feed through System ("OFS") for use at high temperature and pressure, a more stable mechanical system is required at the mated interface of the connector. The present invention utilizes a small piece of "cane" optical waveguide that is cut, ground and polished to certain dimensions in order to create the equivalent of an epoxied termination without the use of any epoxy. The cane material can also be considered a "fat optical fiber" having a core with a geometry normally achieved in a single mode optical fiber (9-10 micron) while the cladding is much greater in diameter than a typical optical fiber (1.25 mm or 2.5 mm in this embodiment, but could be larger or smaller as desired). 1.25 mm and 2.5 mm outer diameters are common standard commercial component diameters that can be utilized to couple two of the terminations of the present invention together at a mated interface. A device called an alignment sleeve, which may be a split ceramic sleeve, manufactured out of a ceramic tube with a slit down the side, can be used in this way.

The cane is manufactured in long sections of rod coming off of a draw tower and being cleaved at random lengths suitable for handling purposes. Small pieces of this cane material are then further processed by grinding and polishing features into a waveguide termination blank. These features including a waveguide body and a stub are needed for coupling of two mated parts on the mating ends and for fusing a standard optical fiber onto the back end or stub face of the waveguide termination blank to provide optical continuity to the rest of the system. The present invention also helps maintain factory settings and calibrations of the fiber optic for device consistency and proper system operation.

In one embodiment, a cylindrical waveguide component surrounds a fiber optic conductor disposed in a central bore formed in the waveguide.

In one embodiment, the present invention provides an epoxy-less optical fiber termination comprising: a waveguide termination comprising a waveguide body, the waveguide body comprising a waveguide core with a waveguide cladding disposed about the waveguide core, and the waveguide body having a mating end and a stub end, the stub end having a stub comprising a stub core and a stub face and protruding from the stub end of the waveguide body; an optical fiber for communicating an optical communications signal, the optical fiber terminated at and joined to the stub face; a strain relief partially disposed over the stub and disposed over a portion of the optical fiber; and an epoxy fill disposed within the strain relief and about the optical fiber, the epoxy fill adapted to protect and support the optical fiber and the termination of the optical fiber at the stub face.

The epoxy-less optical fiber termination may further comprise wherein the outer diameter of the cladding may be 1.25 mm. The outer diameter of the cladding may be 2.50 mm. The optical fiber may be terminated within a fiber diameter step, the fiber diameter step disposed on the stub face of the stub at a large diameter splice; and the strain relief may be disposed about the entire fiber diameter step and is partially disposed over the stub. The waveguide core may comprise germanium doped fused silica glass and the waveguide cladding may comprise fused silica glass. The operating wavelength of the waveguide termination may be between 1520 and 1600 µm.

In another embodiment, the present invention provides an optical communications network for communicating optical signals, the network comprising: a first device and a second device, the first device and second device adapted to transmit and receive optical signals over the optical communications network; an optical fiber terminated by first and second epoxy-less optical terminations, each of the first and second epoxy-less optical terminations comprising: a waveguide termination comprising a waveguide body, the waveguide body comprising a waveguide core with a waveguide cladding disposed about the waveguide core, and the waveguide body having a mating end and a stub end, the stub end having a stub comprising a stub core and a stub face and protruding from the stub end of the waveguide body; an optical fiber for communicating an optical communications signal, the optical fiber terminated at and joined to the stub face; a strain relief partially disposed over the stub and disposed over a portion of the optical fiber; and an epoxy fill disposed within the strain relief and about the optical fiber, the epoxy fill adapted to protect and support the optical fiber and the termination of the optical fiber at the stub face; wherein the first termination terminates the optical fiber at the first device and the second termination terminates the optical fiber at the second device and the first and second devices are adapted to communicate over the optical fiber.

In the network the outer diameter of the waveguide cladding may be 1.25 mm. The outer diameter of the waveguide cladding may be 2.50 mm. The network may further comprise wherein the optical fiber is terminated within a fiber diameter step, the fiber diameter step disposed on the stub face of the stub at a large diameter splice; and wherein the strain relief is disposed about the entire fiber diameter step and is partially disposed over the stub. The waveguide core may comprise germanium doped fused silica glass and the waveguide cladding may comprises fused silica glass. The operating wavelength of the waveguide termination may be between 1520 and 1600 µm. The first device may be a surface device and the second device may be a subsea termination. The first device may be a subsea termination and the second device may be a subsea network device. The network may further comprise wherein both first device and second device further comprise: an internal epoxy-less optical fiber termination adapted to mate in optical communication with the respective first and second epoxy-less optical terminations of the optical fiber.

In yet another embodiment, the present invention provides a method for producing an epoxy-less optical termination comprising: drawing a silica glass rod; cleaving a cane from the silica glass rod; grinding and polishing the cane to form a waveguide termination blank comprising a waveguide body, the waveguide body comprising a waveguide core with a waveguide cladding disposed about the waveguide core, and the waveguide body having a mating end and a stub end, the stub end having a stub comprising a stub core and a stub face and protruding from the stub end of the waveguide body; securing a strain relief about a portion of the stub; attaching an optical fiber to the stub face of the stub of the waveguide termination blank, the optical fiber passing through the strain relief; and filing the strain relief with an epoxy fill.

The method may further comprise: forming a fiber diameter step by fusing a capillary tube about the optical fiber; splicing the fiber diameter step to the stub face by a large diameter splice; and securing the strain relief about the entire fiber diameter and a portion of the stub. The outer diameter of the waveguide cladding may be 1.25 mm. The outer diameter of the waveguide cladding may be 2.50 mm. The waveguide core may comprise germanium doped fused silica glass and the waveguide cladding may comprise fused silica glass. The operating wavelength of the waveguide termination may be between 1520 and 1600 µm.

### BRIEF DESCRIPTION OF THE DRAWINGS

In order to facilitate a full understanding of the present invention, reference is now made to the accompanying drawings, in which like elements are referenced with like numerals. These drawings should not be construed as limiting the present invention, but are intended to be exemplary and for reference.
FIGURE 1 provides a side view of a waveguide in accordance with the present invention.
FIGURE 2 provides a perspective view of an epoxy-less optical termination in accordance with the present invention.
FIGURE 3 provides a perspective view of an epoxy-less optical termination in accordance with the present invention.
FIGURE 4 provides a reverse perspective view of an epoxy-less optical termination in accordance with the present invention.
FIGURE 5 provides a block diagram view of a system that using an epoxy-less optical termination in accordance with the present invention.
FIGURE 6 provides a cross section view of an epoxy-less optical termination in accordance with the present invention.
FIGURE 7 provides a perspective view of an epoxy-less optical termination in accordance with the present invention.

### DETAILED DESCRIPTION

The present invention will now be described in more detail with reference to exemplary embodiments as shown in the accompanying drawings. While the present invention is described herein with reference to the exemplary embodiments, it should be understood that the present invention is not limited to such exemplary embodiments. Those possessing ordinary skill in the art and having access to the teachings herein will recognize additional implementations, modifications, and embodiments, as well as other applications for use of the invention, which are fully contemplated herein as within the scope of the present invention as disclosed and claimed herein, and with respect to which the present invention could be of significant utility.

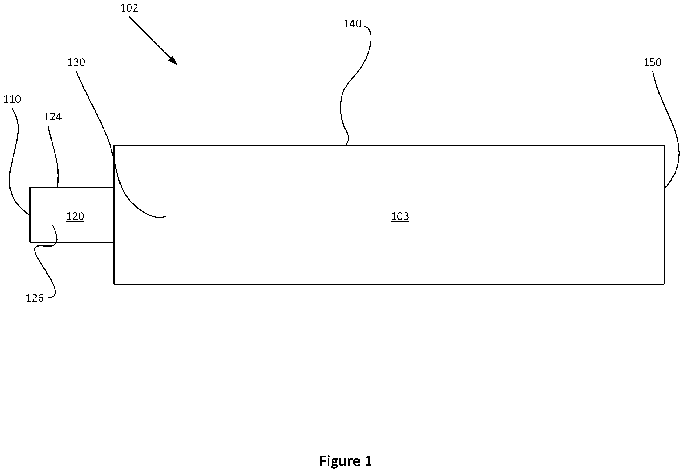

With reference to Figure 1, a side view of a "cane" waveguide termination 102 according to the present invention is provided. The waveguide termination 102 may have a body 103 that comprises a waveguide cladding 140 and a waveguide core 130. The body 103 is substantially cylindrical and the waveguide core 130 is disposed at the middle and through the length of the body 103 with the waveguide cladding 140 disposed about the length of the waveguide core 130. At one end of the body 103 is the mating end 150 and at the other end of the body 103 is the stub 120 having a stub face 110. The mating end 150 of the waveguide termination 102 is adapted to mate with another waveguide termination and the stub face 110 is polished and adapted to be joined with an optical fiber. The stub 120 may also have a stub core 126 and a stub cladding 124. The waveguide cladding 140 may have an outer diameter of 1250 µm or 2500 µm and may be comprised of fused silica glass. The waveguide core 130 may have a diameter of 10 µm and may be comprised of germanium doped fused silica glass. The operating wavelength of the waveguide termination 102 may be 1520-1600 µm. The mating end 150 may have a radius of 10-20 mm. The stub face 110 is polished flat and the stub 120 may protrude 1 mm from the waveguide body 103.

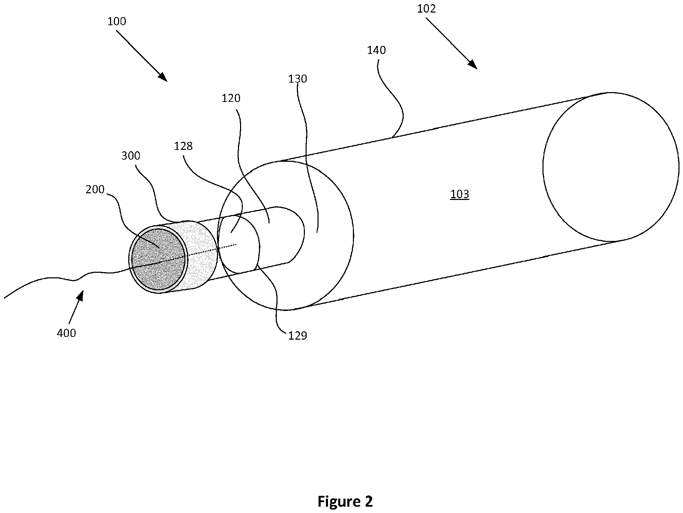

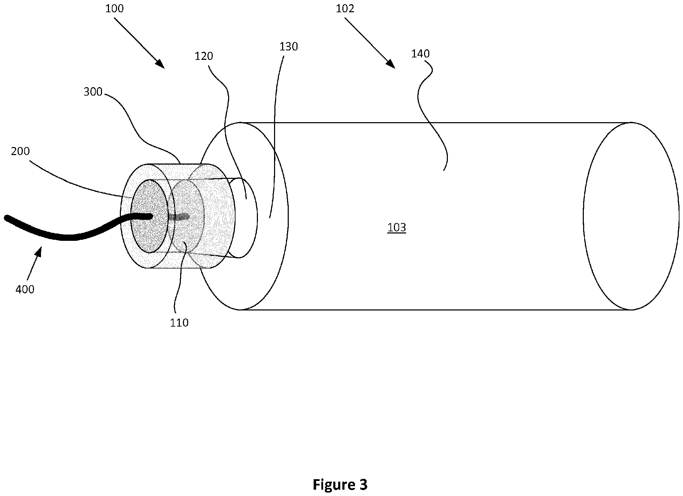

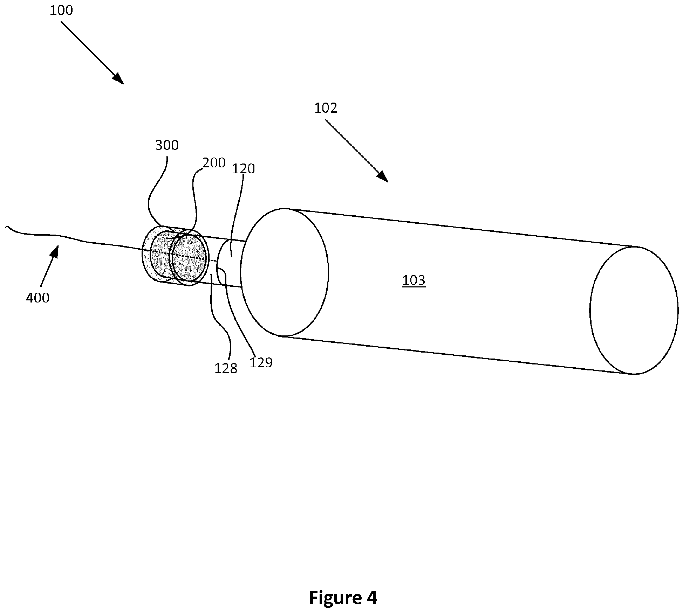

With reference now to Figures 2-4, perspective views of an epoxy-less optical termination 100 are provided. The epoxy-less optical termination 100 comprises an optical fiber 400, a strain relief guide 300, which may be a ceramic split sleeve, an epoxy fill 200 and a waveguide termination 102. The waveguide termination 102 comprises a waveguide body 103, waveguide cladding 140, waveguide core 130, and stub 120. As shown in Figures 2 and 4, the stub 120 is joined to the optical fiber 400 by the fiber diameter step 128 which may be joined to the stub 120 by a large diameter splice 129. The fiber diameter step 128 may be formed by fusing a tightly fit capillary tube over the optical fiber 400. Alternatively, the optical fiber 400 may be joined directly to the stub face 110 of the stub 120 by a butt splice as shown in Figure 3. The butt splice may splice a 125 µm optical fiber 400 to the stub face 110 of the stub 120. The strain relief guide 300 may be a polyimide tubing or a ceramic split sleeve fitted over the large diameter splice 128 or stub 120 to provide strain relief to the optical fiber 400. The strain relief guide 300 may be filled with an epoxy fill 200 in order to provide additional support to the optical fiber 400 and to protect any exposed ends of the optical fiber 400 from the fiber diameter step 128. The epoxy-less optical termination 100 may be used to terminate the optical fiber 400 in a piece of equipment requiring an optical communications connection to another piece of equipment. The communications may take place as optical signals over the optical fiber 400 that are transferred through the waveguide termination 102 to another optical termination, which may be another waveguide termination 102, to a piece of equipment. In one embodiment, the epoxy-less optical termination may be used to terminate both ends of an optical fiber 400 that joins surface equipment to subsea equipment, or an optical fiber 400 that joins two pieces of subsea equipment.

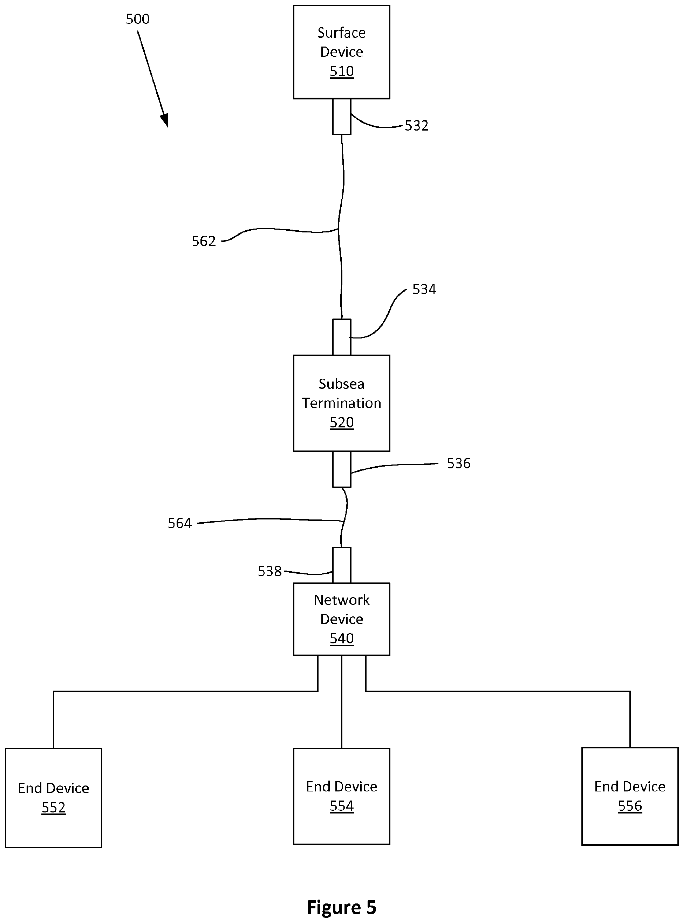

With reference now to Figure 5, a block diagram of a subsea system 500 having a set of devices connected by optical fibers 562 and 564 is provided. The subsea system 500 comprises a surface device 510, a subsea termination 520, a network device 540, and a set of end devices 552, 554, and 556. The optical fiber 562 is terminated at the surface device 510 and subsea termination 520 by epoxy-less optical terminations 532 and 534 respectively. The optical fiber 564 is terminated at the subsea termination 520 and network device 540 by epoxy-less optical terminations 536 and 538 respectively. Additional epoxy-less optical terminations according to the present invention may be used in the interior of the surface device 510, subsea termination 520, and network device 540 to mate with the corresponding epoxy-less optical terminations 532, 534, 536 and 538. The subsea system 500 is used to provide communications and monitoring over an optical network for the end devices 552, 554, and 556. The end devices 552, 554, and 556 may be monitored by equipment at the surface device 510, by the network device 540, or by additional subsea equipment. It should be understood that the system may comprise additional end devices and other additional equipment may also be present and joined to the optical network by additional optical fibers terminated by epoxy-less optical terminations.

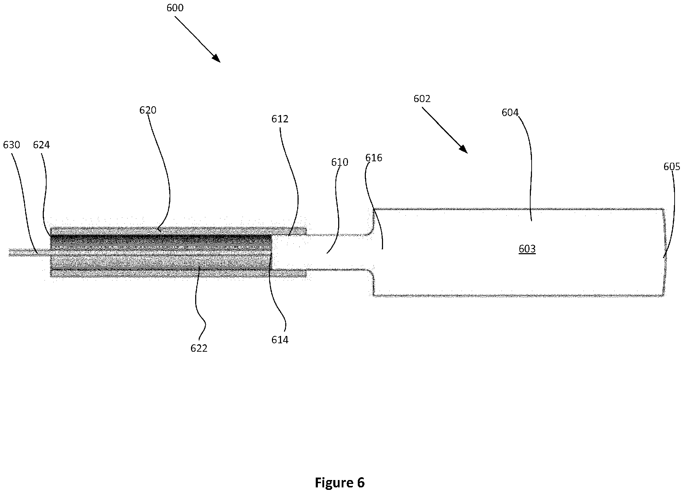

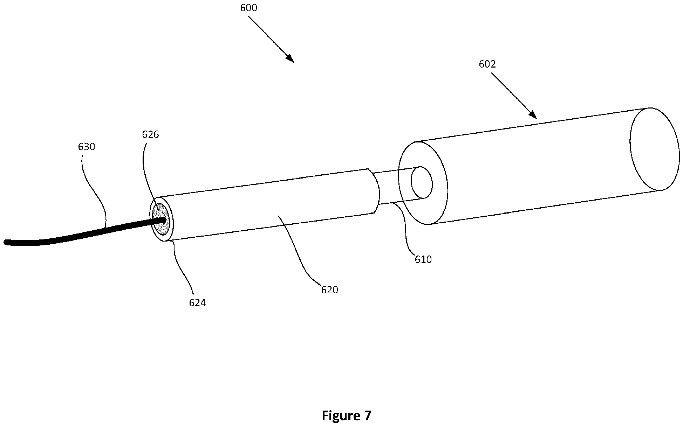

With reference now to Figures 6 and 7, cross-section and perspective views, respectively, of another embodiment of an epoxy-less optical termination 600 are provided. The epoxy-less optical termination 600 comprises a waveguide termination 602, a strain relief guide 620, and an optical fiber 630. The waveguide termination 602 comprises a body 603 having a waveguide cladding 604, waveguide core 616, mating end 605, and stub 610. The stub 610 of the waveguide termination 602 may be elongated compared to the stub 120 of the waveguide termination 102 shown in Figure 1. Additionally, the strain relief 620 is longer than the strain relief 300 shown in Figures 2-4. The interior 622 of the strain relief 620 is disposed over and covers a longer portion of the optical fiber 630 to provide additional support and protection to the fiber splice 612 at the stub face 614. As shown in Figure 7, the epoxy fill 626 fills the entire interior 622 to the face 624 of the strain relief 300 to provide additional support for the optical fiber 630.

While the invention has been described by reference to certain preferred embodiments, it should be understood that numerous changes could be made within the spirit and scope of the inventive concept described. In implementation, the inventive concepts may be automatically or semi-automatically, i.e., with some degree of human intervention, performed. Also, the present invention is not to be limited in scope by the specific embodiments described herein. It is fully contemplated that other various embodiments of and modifications to the present invention, in addition to those described herein, will become apparent to those of ordinary skill in the art from the foregoing description and accompanying drawings. Thus, such other embodiments and modifications are intended to fall within the scope of the following appended claims. Further, although the present invention has been described herein in the context of particular embodiments and implementations and applications and in particular environments, those of ordinary skill in the art will appreciate that its usefulness is not limited thereto and that the present invention can be beneficially applied in any number of ways and environments for any number of purposes. Accordingly, the claims set forth below should be construed in view of the full breadth and spirit of the present invention as disclosed herein.

## Claims

1. An epoxy-less optical fiber termination comprising:
a waveguide termination comprising a waveguide body, the waveguide body comprising a waveguide core with a waveguide cladding disposed about the waveguide core, and the waveguide body having a mating end and a stub end, the stub end having a stub comprising a stub core and a stub face and protruding from the stub end of the waveguide body;
an optical fiber for communicating an optical communications signal, the optical fiber terminated at and joined to the stub face;
a strain relief partially disposed over the stub and disposed over a portion of the optical fiber; and
an epoxy fill disposed within the strain relief and about the optical fiber, the epoxy fill adapted to protect and support the optical fiber and the termination of the optical fiber at the stub face.

2. The epoxy-less optical fiber termination of claim 1 wherein the outer diameter of the cladding is 1.25 mm.

3. The epoxy-less optical fiber termination of claim 1 wherein the outer diameter of the cladding is 2.50 mm.

4. The epoxy-less optical fiber termination of claim 1 wherein the optical fiber is terminated within a fiber diameter step, the fiber diameter step disposed on the stub face of the stub at a large diameter splice; and
a. t he strain relief is disposed about the entire fiber diameter step and is partially disposed over the stub.

5. The epoxy-less optical fiber termination of claim 1 wherein the waveguide core comprises germanium doped fused silica glass and the waveguide cladding comprises fused silica glass.

6. The epoxy-less optical fiber termination of claim 1 wherein the operating wavelength of the waveguide termination is between 1520 and 1600 µm.

7. An optical communications network for communicating optical signals, the network comprising:
a first device and a second device, the first device and second device adapted to transmit and receive optical signals over the optical communications network;
an optical fiber terminated by first and second epoxy-less optical terminations, each of the first and second epoxy-less optical terminations comprising:
a waveguide termination comprising a waveguide body, the waveguide body comprising a waveguide core with a waveguide cladding disposed about the waveguide core, and the waveguide body having a mating end and a stub end, the stub end having a stub comprising a stub core and a stub face and protruding from the stub end of the waveguide body;
an optical fiber for communicating an optical communications signal, the optical fiber terminated at and joined to the stub face;
a strain relief partially disposed over the stub and disposed over a portion of the optical fiber; and
an epoxy fill disposed within the strain relief and about the optical fiber, the epoxy fill adapted to protect and support the optical fiber and the termination of the optical fiber at the stub face;
wherein the first termination terminates the optical fiber at the first device and the second termination terminates the optical fiber at the second device and the first and second devices are adapted to communicate over the optical fiber.

8. The network of claim 7 wherein the outer diameter of the waveguide cladding is 1.25 mm.

9. The network of claim 7 wherein the outer diameter of the waveguide cladding is 2.50 mm.

10. The network of claim 7 further comprising:
wherein the optical fiber is terminated within a fiber diameter step, the fiber diameter step disposed on the stub face of the stub at a large diameter splice; and
the strain relief is disposed about the entire fiber diameter step and is partially disposed over the stub.

11. The network of claim 7 wherein the waveguide core comprises germanium doped fused silica glass and the waveguide cladding comprises fused silica glass.

12. The network of claim 7 wherein the operating wavelength of the waveguide termination is between 1520 and 1600 µm.

13. The network of claim 7 wherein first device is a surface device and the second device is a subsea termination.

14. The network of claim 7 wherein the first device is a subsea termination and the second device is a subsea network device.

15. The network of claim 7 wherein both first device and second device further comprise:
an internal epoxy-less optical fiber termination adapted to mate in optical communication with the respective first and second epoxy-less optical terminations of the optical fiber.

16. A method for producing an epoxy-less optical termination comprising:
drawing a silica glass rod;
cleaving a cane from the silica glass rod;
grinding and polishing the cane to form a waveguide termination blank comprising a waveguide body, the waveguide body comprising a waveguide core with a waveguide cladding disposed about the waveguide core, and the waveguide body having a mating end and a stub end, the stub end having a stub comprising a stub core and a stub face and protruding from the stub end of the waveguide body;
securing a strain relief about a portion of the stub;
attaching an optical fiber to the stub face of the stub of the waveguide termination blank, the optical fiber passing through the strain relief; and
filing the strain relief with an epoxy fill.

17. T he method of claim 16 further comprising:
forming a fiber diameter step by fusing a capillary tube about the optical fiber;
splicing the fiber diameter step to the stub face by a large diameter splice; and
securing the strain relief about the entire fiber diameter and a portion of the stub.

18. The method of claim 16 further comprising wherein the outer diameter of the waveguide cladding is 1.25 mm.

19. The method of claim 16 further comprising wherein the outer diameter of the waveguide cladding is 2.50 mm.

20. The method of claim 16 further comprising wherein the waveguide core comprises germanium doped fused silica glass and the waveguide cladding comprises fused silica glass.

21. T he method of claim 16 further comprising wherein the operating wavelength of the waveguide termination is between 1520 and 1600 µm.
